# EUROPEAN PATENT APPLICATION

(11) **EP 4 375 797 A1**
(43) Date of publication of application: **29.05.2024**
(21) Application number: 23782409.9
(22) Date of filing: 15.09.2023
(51) Int. Cl.: G06F 1/16, H04R 1/10, H04R 1/32, G02B 27/01

(54) **WEARABLE DEVICE COMPRISING SPEAKER**

(30) Priority: 11.10.2022 KR 20220130104; 11.11.2022 KR 20220151003
(71) Applicant: Samsung Electronics Co., Ltd., Suwon-Si, Gyeonggi-do 16677 (KR)
(72) Inventor: CHO, Joonrae, Suwon-si Gyeonggi-do 16677 (KR); KIM, Donghyun, Suwon-si Gyeonggi-do 16677 (KR); YANG, Seongkwan, Suwon-si Gyeonggi-do 16677 (KR); SIM, Myoungsung, Suwon-si Gyeonggi-do 16677 (KR); PARK, Minjung, Suwon-si Gyeonggi-do 16677 (KR); SONG, Hakhoon, Suwon-si Gyeonggi-do 16677 (KR); LEE, Byounghee, Suwon-si Gyeonggi-do 16677 (KR); HONG, Janghoon, Suwon-si Gyeonggi-do 16677 (KR)
(74) Representative: Nederlandsch Octrooibureau
(86) International application number: PCT/KR2023/014004
(87) International publication number: WO 2024/080596

(57) **Abstract**

A wearable device according to an embodiment includes a frame including a first partition wall having flexibility and a second partition wall in contact with the first partition wall and having rigidity; and a speaker including a first surface and a second surface opposite to the first surface, and being surrounded by the second partition wall. The wearable device includes a first space in contact with the second surface and extending from an inside of the second partition wall to an inside of the first partition wall. The wearable device includes an enclosure including a flexible region disposed on the first partition wall, and a rigid region extending from the flexible region and disposed on the second partition wall. The enclosure is configured to seal the first space.

## Description

### [Technical Field]

The disclosure generally relate to a wearable device including a speaker.

### [Background Art]

A wearable device may be used while being worn on a part of a user's body. The wearable device may be provided in various types of products. For example, the wearable device may include a glasses-type device for providing augmented reality (AR) or virtual reality (VR) to a user. The wearable device may include a speaker for providing an audio signal to the user. The speaker may be configured to output the audio signal. The speaker may be configured such that the audio signal is transmitted from the speaker to the outside of the wearable device, thereby providing the user with various user experiences.

### [Disclosure]

### [Technical Solution]

According to an embodiment, a wearable device comprises a frame including a first partition wall being deformable as having flexibility and a second partition wall in contact with the first partition wall and having rigidity, the frame configured to be supported by a part of a user's body of the wearable device, and be at least partially deformable according to a shape of the part of the user's body. The wearable device comprises a speaker including a first surface and a second surface opposite to the first surface, and being surrounded by the second partition wall. The wearable device comprises a first space in contact with the second surface and extending from an inside of the second partition wall to an inside of the first partition wall. The wearable device comprises an enclosure including a flexible region disposed on the first partition wall, and a rigid region extending from the flexible region and facing the second surface of the speaker as disposed on the second partition wall, the enclosure sealing the first space.

According to an embodiment, a wearable device comprises a frame including a first partition wall being deformable as having flexibility and a second partition wall in contact with the first partition wall and having rigidity, the frame being supported by a part of a user's body of the wearable device, and being at least partially deformable according to a shape of the part of the user's body. The wearable device comprises a speaker including a first surface, a second surface opposite to the first surface, and a third surface connecting the first surface and the second surface, and being surrounded by the second partition wall. The wearable device comprises a first space in contact with the second surface and a portion of the third surface and extending from an inside of the second partition wall to an inside of the first partition wall. The wearable device comprises a second space spaced apart from the first space by the speaker and being in contact with the first surface, the second space being disposed inside the second partition wall. The wearable device further include a speaker hole connected from the second space to an outside of the wearable device and a vent hole connected from the first space to the outside of the wearable device. The wearable device comprises an enclosure including a flexible region disposed on the first partition wall, and a rigid region extending from the flexible region and facing the second surface of the speaker as disposed on the second partition wall, the enclosure sealing the first space.

### [Description of Drawings]

FIG. 1 is a block diagram of an electronic device in a network environment according to an embodiment.
FIG. 2A illustrates an example of a perspective view of an electronic device according to an embodiment.
FIG. 2B illustrates an example of one or more hardware components disposed in an electronic device according to an embodiment.
FIG. 3A shows a portion of a frame of an example electronic device.
FIG. 3B shows a portion of a frame of an example electronic device of FIG. 3A.
FIG. 4A is a rear view of an enclosure of an example speaker.
FIG. 4B is a partially exploded perspective view of a frame of an example electronic device.
FIG. 4C is a partial cross-sectional view of an example electronic device.
FIG. 5A shows a portion of a frame of an example electronic device.
FIG. 5B is a partial cross-sectional view of an example electronic device taken along line A-A' of FIG. 5A.
FIGS. 5C and 5D show a portion of an enclosure of an example speaker.
FIG. 6 shows a portion of an example electronic device.

### [Mode for Invention]

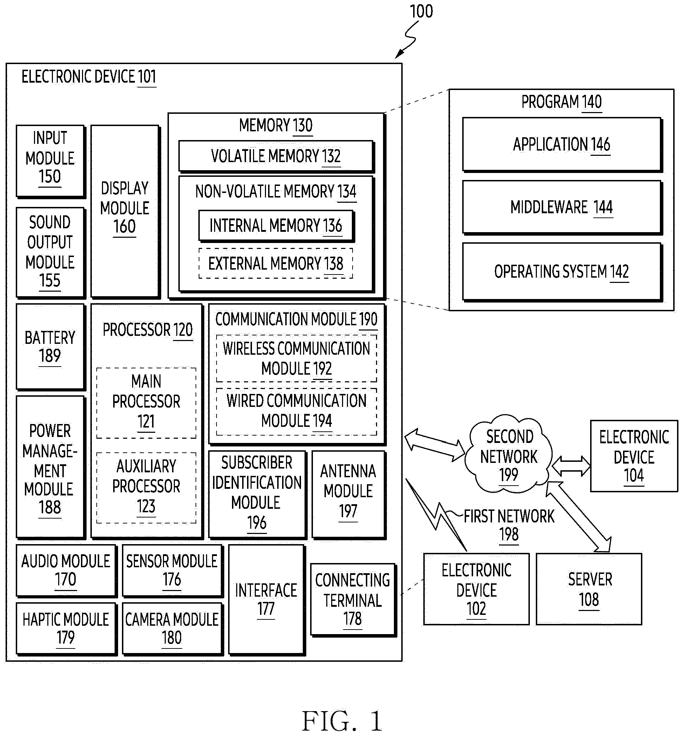

FIG. 1 is a block diagram of an electronic device in a network environment according to an embodiment.

Referring to FIG. 1, an electronic device 101 in a network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, a memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in a volatile memory 132, process the command or the data stored in the volatile memory 132, and store resulting data in a non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high-definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to address, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to an embodiment, the antenna module 197 may be a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra-low latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

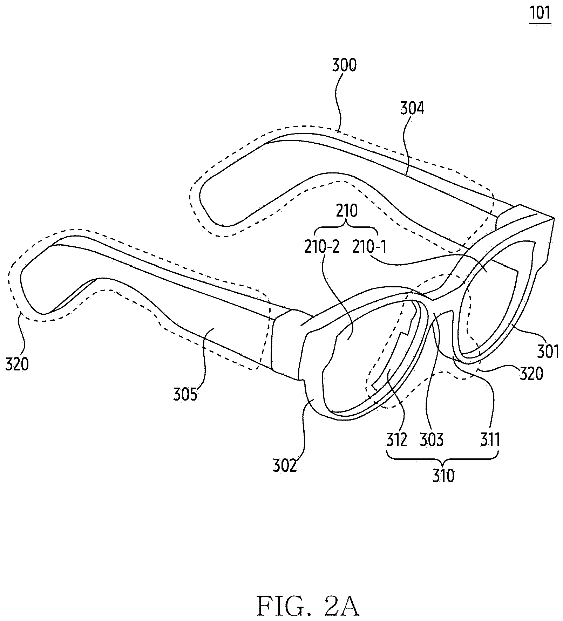

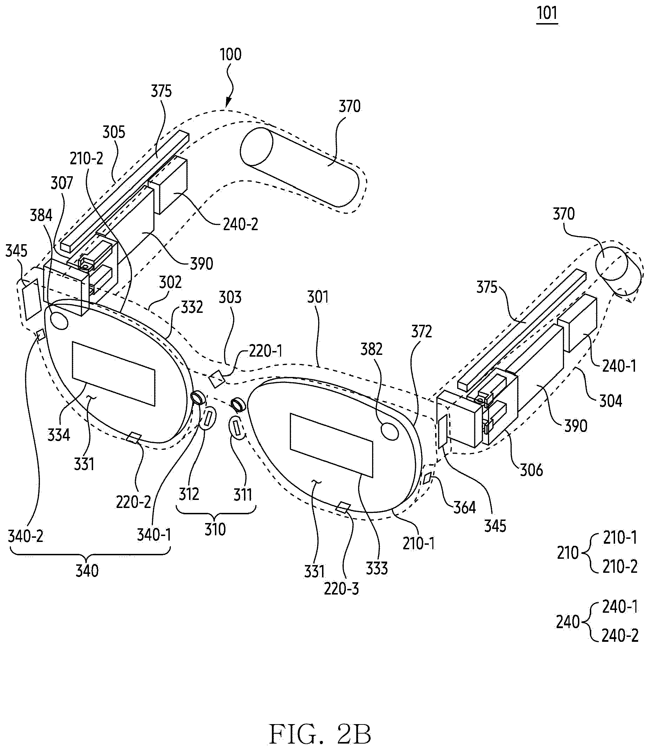

FIG. 2A is a perspective view of an example electronic device according to an embodiment, and FIG. 2B illustrates an example of one or more hardware components disposed in an example electronic device according to an embodiment.

According to an embodiment, an electronic device 101 may be referred to as a wearable device worn on a part of a user's body.

According to an embodiment, the electronic device 101 may be worn on a part of a user's body. The electronic device 101 may provide a user wearing the electronic device 101 with augmented reality (AR), virtual reality (VR), or mixed reality (MR) in which augmented reality and virtual reality are mixed together. For example, the electronic device 101 may display on at least one display 210 a virtual reality image provided from at least one optical devices 382 and 384 of FIG. 2B, in response to a user's designated gesture obtained through a motion recognition camera 340-2.

According to an embodiment, the at least one display 210 may provide visual information to the user. For example, the at least one display 210 may include a transparent or translucent lens. The at least one display 210 may include a first display 210-1 and/or a second display 210-2 spaced apart from the first display 210-1. For example, the first display 210-1 and the second display 210-2 may be disposed at positions each corresponding to the left and right eyes of the user.

Referring to FIG. 2B, the at least one display 210 may provide visual information transmitted from external light to the user through a lens included in the at least one display 210, and other visual information distinct from the visual information. For example, the lens may be formed based on at least one of a Fresnel lens, a pancake lens, or a multi-channel lens. For example, the at least one display 210 may include a front surface 331 and a rear surface 332 opposite to the front surface 331. A display area may be formed on the rear surface 332 of the at least one display 210. When the user is wearing the electronic device 101, external light may be incident onto the front surface 331 and then transmitted through the rear surface 332, thereby being transferred to the user. As another example, the at least one display 110 may display an augmented reality image in which a virtual reality image provided from the at least one optical device 382 or 384 is combined with a reality screen transferred through external light, in a display area formed on the rear surface 332.

In an embodiment of the disclosure, the at least one display 110 may include at least one waveguide 333 or 334 that diffracts light transmitted from the at least one optical device 382 or 384 to transmit the light to the user. The at least one waveguide 333 or 334 may be formed based on at least one of glass, plastic, or polymer. Nano-patterns may be formed on at least a portion of the outside or the inside of the at least one waveguide 333 or 334. The nano-pattern may be formed based on a polygonal and/or curved grating structure. Light incident to one end of the at least one waveguide 333 or 334 may be propagated to the other end of the at least one waveguide 333 or 334 by the nano-pattern. The at least one waveguide 333 or 334 may include at least one of a diffractive element (e.g., a diffractive optical element (DOE), a holographic optical element (HOE), etc.) or a reflective element (e.g., a reflective mirror). For example, the at least one waveguides 333 or 334 may be disposed in the electronic device 101 to guide a screen displayed by the at least one display 210 to the user's eyes. For example, the screen may be transmitted to the user's eyes, based on total internal reflection (TIR) generated within the at least waveguides 333 and/or 334.

The electronic device 101 may analyze an object included in a real-world image collected through a photographing camera (not shown) (e.g., a camera 340 of FIG. 2B), and combine a virtual object corresponding to an object to be provided with augmented reality amongst the analyzed objects to display the combined virtual object on the at least one display 210. The virtual object may include at least one of a text and an image for various information related to the object included in the real-world image. The electronic device 101 may analyze the object based on a multi-camera such as a stereo camera. In order to analyze the object, the electronic device 101 may execute time-of-flight (ToF) and/or simultaneous localization and mapping (SLAM) capable of being supported by a multi-camera. A user wearing the electronic device 101 may watch an image displayed on the at least one display 210.

According to an embodiment, a frame 300 may have a physical structure in which the electronic device 101 may be worn on auser's body. According to an embodiment, when the user is wearing the electronic device 101, the frame 300 may be configured such that the first display 210-1 and the second display 210-2 are located at the positions corresponding to the user's left and right eyes. The frame 300 may support at least one display 210. For example, the frame 300 may support the first display 210-1 and the second display 210-2 to be located at the positions corresponding to the left eye and the right eye of the user.

Referring to FIG. 2A, when the user wears the electronic device 101, the frame 300 may include an area 320 at least partially in contact with a part of a user's body. For example, the area 320 in contact with the part of the user's body of the frame 300 may include an area in contact with a portion of the user's nose, a portion of the user's ear, and a portion of a side surface of the user's face, which are in contact with the electronic device 101. According to an embodiment, the frame 300 may include a nose pad 310 that is suitable to be in contact with a part of the user's body. When the electronic device 101 is worn by the user, the nose pad 310 may come into contact with a portion of the user's nose. The frame 300 may include a first temple 304 and a second temple 305 that are suitable to be in contact with another part of the user's body, which is distinguished from one part of the user's body.

For example, the frame 300 may include a first rim 301 surrounding at least a portion of the first display 210-1, a second rim 302 surrounding at least a portion of the second display 210-2, a bridge 303 disposed between the first rim 301 and the second rim 302, a first pad 311 disposed along a portion of an edge of the first rim 301 from one end of the bridge 303, a second pad 312 disposed along a portion of an edge of the second rim 302 from the other end of the bridge 303, a first temple 304 extending from the first rim 301 and fixed to a portion of the user's ear, and a second temple 305 extending from the second rim 302 and fixed to a portion of another ear opposite to the ear. The first pad 311 and the second pad 312 may be suitable to be in contact with a portion of the user's nose, and the first temple 304 and the second temple 305 may be suitable to be in contact with a portion of the user's face and a portion of the user's ear. The temples 304 and 305 may be rotatably connected to the rim through the hinge units 306 and 307 of FIG. 2B. The first temple 304 may be rotatably connected to the first rim 301 through a first hinge unit 306 disposed between the first rim 301 and the first temple 304. The second temple 305 may be rotatably connected to the second rim 302 through a second hinge unit 307 disposed between the second rim 302 and the second temple 305. According to an embodiment, the electronic device 101 may identify an external object (e.g., a user's fingertip) touching the frame 300 and/or a gesture performed by the external object, using a touch sensor, a grip sensor, and/or a proximity sensor formed on at least a portion of a surface of the frame 300.

According to an embodiment, the electronic device 101 may include hardware configured to perform various functions. For example, the hardware may include a battery module 370, an antenna module 375, at least one optical device 382 or 384, a speaker module 240, a microphone array 230, a light emitting module (not shown), and/or a printed circuit board 390. These various hardware may be arranged within the frame 300.

According to an embodiment, the microphone array 230 of the electronic device 101 may be disposed on at least a part of the frame 300 to obtain a sound signal. For example, the microphone array 230 may include a first microphone 220-1, a second microphone 220-2, and/or a third microphone 220-3. Although FIG. 2B illustrates the first microphone 220-1 disposed on the nose pad 310, the second microphone 220-2 disposed on the second rim 302, and the third microphone 220-3 disposed on the first rim 301, the number and arrangement of microphones in present the disclosure are not limited to those of the embodiment of FIG. 2B. In the case where the number of microphones included in the electronic device 101 is two or more, the electronic device 101 may identify a direction of the sound signal, using a plurality of microphones disposed on different portions of the frame 300.

According to an embodiment, the at least one optical device 382 or 384 may project a virtual object on the at least one display 210 in order to provide various image information to a user. For example, the at least one optical device 382 or 384 may be a projector. The at least one optical device 382 or 384 may be disposed adjacent to the at least one display 210 or may be included in the at least one display 210 as a part of the at least one display 210. According to an embodiment, the electronic device 101 may include a first optical device 382 corresponding to the first display 210-1 and a second optical device 384 corresponding to the second display 210-2. For example, the at least one optical device 382 or 384 may include a first optical device 382 disposed at a periphery of the first display 210-1 and a second optical device 384 disposed at a periphery of the second display 210-2. The first optical device 382 may transmit light to the first waveguide 333 disposed on the first display 210-1, and the second optical device 384 may transmit light to the second waveguide 334 disposed on the second display 210-2.

In an embodiment, the camera 340 may include a photographing camera, an eye tracking camera (ET CAM) 340-1, and/or a motion recognition camera 340-2. The photographing camera, the eye tracking camera 340-1, and the motion recognition camera 340-2 may be arranged at different positions on the frame 300 and may perform different functions. The eye tracking camera 340-1 may output data indicating an eye gaze of a user who is wearing the electronic device 101. For example, the electronic device 101 may detect the eye gaze from an image including the user's pupil, which is obtained through the eye tracking camera 340-1. Although FIG. 2B illustrates an example in which the eye tracking camera 340-1 is arranged toward the user's right eye, but the embodiment is not limited thereto, and the eye tracking camera 340-1 may be disposed alone toward the user's left eye or may be disposed toward both the eyes.

In an embodiment, the photographing camera may capture an actual image or background to be matched with a virtual image to implement augmented reality or mixed reality content. The photographing camera may capture an image of a specific object existing at a position viewed by the user to provide the image to the at least one display 210. The at least one display 210 may display one image in which the actual image or background including an image of the specific object captured using the photographing camera is overlapped with a virtual image provided through the at least one optical device 382 or 384. In an embodiment, the photographing camera may be disposed on the bridge 303 disposed between the first rim 301 and the second rim 302.

The eye tracking camera 340-1 may track a gaze of the user wearing the electronic device 101 and match the user's gaze with the visual information provided on at least one display 210 to realize more realistic augmented reality. For example, when the user looks at the front, the electronic device 101 may naturally display, on the at least one display 210, environment information related to the front of the user at a place where the user is located. The eye tracking camera 340-1 may be configured to capture an image of a pupil of the user to determine the gaze of the user. For example, the eye tracking camera 340-1 may receive gaze detection light reflected from the pupil of the user and track the gaze of the user based on a position and a movement of the received gaze detection light. In an embodiment, the eye tracking camera 340-1 may be disposed at positions corresponding to the left eye and the right eye of the user. For example, the eye tracking camera 340-1 may be disposed, in the first rim 301 and/or the second rim 302, to face a direction in which the user wearing the electronic device 101 is located. For example, the motion recognition camera 364 may be disposed in the second rim 302. For example, a motion recognition camera 364 may perform substantially the same operation as the motion recognition camera 340-2 included in the first rim 301.

The motion recognition camera 340-2 may recognize a movement of the entire or part of the user's body such as the user's torso, hand, or face, thereby providing a specific event to the screen provided on the at least one display 210. The motion recognition camera 340-2 may recognize a gesture of the user to obtain a signal corresponding to the gesture and may provide an indication corresponding to the signal to the at least one display 210. The processor may identify a signal corresponding to the gesture, and perform a designated function based on the identification. In an embodiment, the motion recognition camera 340-2 may be disposed on the first rim 301 and/or the second rim 302.

The camera 340 included in the electronic device 101 is not limited to the eye tracking camera 340-1 and the motion recognition camera 340-2 described above. For example, the electronic device 101 may use the camera 340 arranged toward a field of view (FoV) of the user to identify an external object included in the FoV. The electronic device 101 may identify the external object, based on a sensor for identifying a distance between the electronic device 101 and the external object, such as a depth sensor and/or a time of flight (ToF) sensor. The camera 340 arranged toward the FoV may support an auto-focus function and/or an optical image stabilization (OIS) function. For example, the electronic device 101 may include the camera 340 (e.g., a face tracking (FT) camera) disposed toward the user's face to obtain an image including the face of the user wearing the electronic device 101.

Although not illustrated herein, according to an embodiment, the electronic device 101 may further include a light source (e.g., LED) emitting light toward a subject (e.g., user's eyes, face, and/or an external object in FoV) captured using the camera 340. The light source may include an LED of an infrared wavelength. The light source may be disposed in at least one of the frame 300 or the hinge units 306 or 307.

According to an embodiment, the battery module 370 may supply power to electronic components of the electronic device 101. In an embodiment, the battery module 370 may be disposed in the first temple 304 and/or the second temple 305. For example, the battery module 370 may include a plurality of battery modules 370. The plurality of battery modules 370 may be disposed in the first temple 304 and the second temple 305, respectively. In an embodiment, the battery module 370 may be disposed at one end of the first temple 304 and/or the second temple 305.

The antenna module 375 may transmit a signal or power to the outside of the electronic device 101 or receive a signal or power from the outside. The antenna module 375 may be electrically and/or operatively connected to the communication circuitry of the electronic device 101. In an embodiment, the antenna module 375 may be disposed in the first temple 304 and/or the second temple 305. For example, the antenna module 375 may be disposed close to one surface of the first temple 304 and/or the second temple 305.

The speaker module 240 may output an audio signal to the outside of the electronic device 101. The sound output module 155 may be referred to as a speaker module. In an embodiment, the speaker module 240 may be disposed in the first temple 304 and/or the second temple 305 so as to be placed adjacent to the ears of the user wearing the electronic device 101. For example, the speaker module 240 may include a first speaker module 240-1 disposed in the first temple 304 to be adjacent to the left ear of the user, and a second speaker module 240-2 disposed in the second temple 305 to be adjacent to the right ear of the user.

The light emitting module (not shown) may include at least one light emitting element. The light emitting module may emit light of a color corresponding to a specific state or may emit light in an operation corresponding to the specific state, in order to visually provide information on the specific state of the electronic device 101 to the user. For example, in case that charging is required, the electronic device 101 may emit light in red color at regular intervals. In an embodiment, the light emitting module may be disposed on the first rim 301 and/or the second rim 302.

Referring to FIG. 2B, according to an embodiment, the electronic device 101 may include a printed circuit board (PCB) 390. The PCB 390 may be included in at least one of the first temple 304 or the second temple 305. The PCB 390 may include an interposer (not shown) disposed between at least two sub-PCBs. One or more hardware components included in the electronic device 101 may be disposed on the PCB 390. The electronic device 101 may include a flexible PCB (FPCB) for interconnecting the hardware components.

According to an embodiment, the electronic device 101 may include at least one of a gyro sensor, a gravity sensor, and/or an acceleration sensor, for detecting a posture of the electronic device 101 and/or a posture of a body part (e.g., head) of the user wearing the electronic device 101. Each of the gravity sensor or the acceleration sensor may measure the acceleration of gravity and/or an acceleration, based on specified three-dimensional axes (e.g., x-axis, y-axis, and z-axis) perpendicular to each other. The gyro sensor may measure the angular velocity of each of the specified three-dimensional axes (e.g., x-axis, y-axis, and z-axis). At least one of the gravity sensor, the acceleration sensor, or the gyro sensor may be referred to as an inertial measurement unit (IMU). According to an embodiment, the electronic device 101 may identify a user's motion and/or gesture performed to execute or cease a specific function of the electronic device 101 based on the IMU.

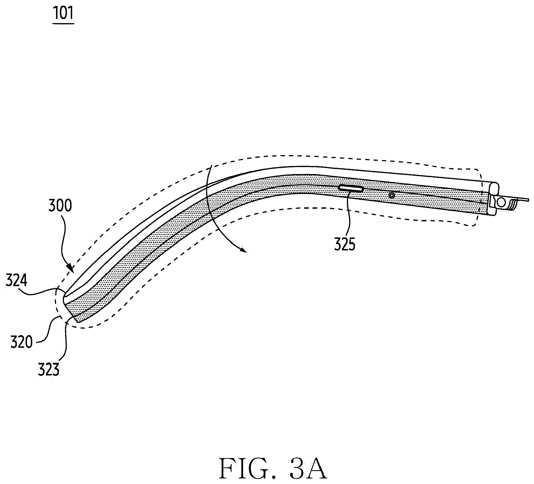

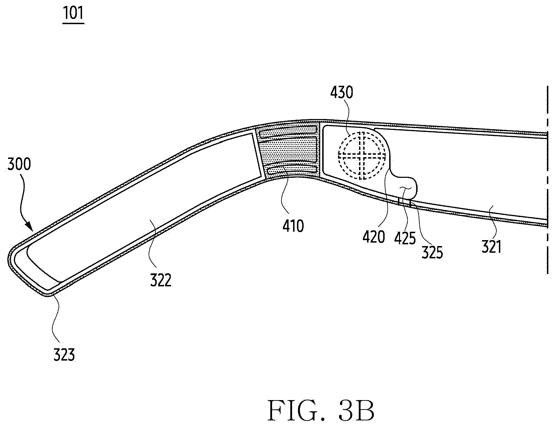

FIG. 3A illustrates a portion of a frame of an example electronic device, and FIG. 3B illustrates a portion of a frame of the example electronic device of FIG. 3A.

Referring to FIGS. 3A and 3B, the electronic device 101 may include a frame 300 and a speaker 430. The frame 300 may include an area 320 suitable to be in contact with a part of the user's body. A portion of the frame 300 illustrated in FIGS. 3A and 3B may be referred to as the first temple 304 and/or the second temple 305 of FIG. 2A.

According to an embodiment, the frame 300 may be supported by a portion of the body of the user wearing the electronic device 101. At least a portion of the frame 300 may be deformable according to the shape of the body portion.

For example, when the user wears the electronic device 101, the frame 300 may include an area 320 at least partially in contact with a portion of the user's body. The area 320 in contact with the portion of the user's body of the frame 300 may include an area in contact with a portion of the user's nose, a portion of the user's ear, and a portion of a side surface of the user's face, which are contacted by the electronic device 101. The frame 300 may provide the electronic device 101 with a physical structure corresponding to the portion of the user's body, so that the electronic device 101 is worn on the user's body.

For example, the frame 300 may include a first temple 304 and a second temple 305 that are brought into contact with a portion of the user's body. The frame 300 may include a nose pad (e.g., the nose pad 310 of FIG. 2A) coming into contact with another portion of the user's body, which is distinguished from the portion of the user's body. When the electronic device 101 is worn by the user, the first temple 304 and the second temple 305 may be disposed at positions corresponding to the left ear and the right ear of the user, respectively. These temples 304 and 305 may be in contact with a portion of the user's ear. The nose pad 310 may be in contact with a portion of the user's nose.

For example, the area 320 in contact with a portion of the user's body of the frame 300 may include a flexible portion. For example, the first temple 304 and/or the second temple 305 may have flexibility so that it may be deformable according to the shape of the ear when the first temple 304 and/or the second temple 305 come into contact with a portion of the user's ear. For example, due to the flexibility, the nose pad 310 may be deformable according to the shape of the nose when it comes into contact with a portion of the user's nose. The frame 300 may be deformable according to the shape of the portion of the user's body, thereby providing convenience when the user wears the electronic device 101 and reducing damage to the electronic device 101 caused by an external impact.

According to an embodiment, the frame 300 may further include a flexible portion 323 and a support portion 324 supporting the flexible portion 323. The flexible portion 323 may be supported by a portion (e.g., an ear) of the user's body. At least a portion of the flexible portion 323 may be supported by the portion of the user's body so as to be deformable.

According to an embodiment, the frame 300 may include a flexible portion 323 disposed in an area 320 in contact with a part of the user's body and a support portion 324 supporting the flexible portion 323. For example, the flexible portion 323 of the frame 300 may be in contact with a portion of the user's ear and may be deformable according to the shape of the portion of the user's ear. The support portion 324 supporting the flexible portion 323 may be in contact with a portion of a side surface of the user's face. The support portion 324 may extend from the flexible portion 323. Unlike the flexible portion 323, the support portion 324 may have rigidity. The support portion 324 may have rigidity to support the flexible portion 323 such that the flexible portion 323 may be deformed within a specified range as the flexible portion 323 is deformed to fit the shape of a part of the user's body. The support portion 324 may have rigidity to support at least one display 210 of the electronic device 101.

According to an embodiment, the frame 300 may include a first partition wall 410 and a second partition wall 420. The first partition wall 410 may be deformable by having flexibility. The second partition wall 420 may be in contact with the first partition wall 410. The second partition wall 420 may have rigidity. The first partition wall 410 and the second partition wall 420 may be disposed in the frame 300.

For example, the first partition wall 410 and the second partition wall 420 may be part of the frame 300 disposed in the electronic device 101. The first partition wall 410 and the second partition wall 420 may be configured such that the frame 300 provides a plurality of spaces for electronic components in the electronic device 101. As the first partition wall 410 has flexibility, it may provide flexibility to a portion of the frame 300 including the first partition wall 410. The portion of the frame 300 including the first partition wall 410 may be in contact with a part of the user's body and may be deformed to fit the shape of the part of the user's body. As the second partition wall 420 has rigidity, it may provide rigidity to another portion of the frame 300 including the second partition wall 420. Owing to the second partition wall 420 having rigidity, the second partition wall 420 may protect the electronic components within the electronic device 101 surrounded by the second partition wall 420 from an external impact.

According to an embodiment, the speaker 430 (e.g., the speaker module 240, the first speaker module 240-1, and the second speaker module 240-2 of FIG. 2B) may be surrounded by the second partition wall 420. The speaker 430 may be configured to output an audio signal. The speaker 430 may be configured to convert the audio signal into a sound signal and transmit the sound signal from the inside of the electronic device 101 to the outside of the electronic device 101. The second partition wall 420 may surround the speaker 430 to reduce sound leakage of the sound signal transmitted from the speaker 430 to the outside of the electronic device 101. The sound signal may be transmitted from the speaker 430 to the outside of the frame 300, which includes the second partition wall 420 and is in contact with a part (e.g., an ear) of the user's body.

For example, although not illustrated, the speaker 430 may include a diaphragm, at least one voice coil, and a magnet in the speaker 430. The speaker 430 may be configured such that the at least one voice coil receives a current through an audio signal amplified by an amplifier of the electronic device 101. When the current flows through the at least one voice coil, a magnetic field formed in the at least one voice coil may interact with a magnetic field formed by the magnet to vibrate the at least one voice coil. The diaphragm connected to the voice coil may vibrate based on the vibration of the at least one voice coil. Based on the vibration of the diaphragm, the speaker 430 may be configured to convert an audio signal into a sound signal and output the sound signal.

For example, the second partition wall 420 surrounding the speaker 430 may be configured to provide a path of the sound signal transmitted from the speaker 430 to the outside. For example, the second partition wall 420 may include a duct 425 extending from a portion of the speaker 430 through which the sound signal is emitted toward the outside of the frame 300. As the rigid second partition wall 420 is configured to surround the speaker 430, the second partition wall 420 can reduce damage to the speaker 430 by any external impact.

According to an embodiment, the electronic device 101 may further include a speaker hole 325. The speaker hole 325 may be connected from the inside of the frame 300 of the electronic device 101 to the outside of the electronic device 101. For example, the speaker hole 325 may be a path through which a sound signal emitted from the speaker 430 is transmitted to the outside of the electronic device 101. The speaker hole 325 may pass through the second partition wall 420 surrounding the speaker 430 and/or the flexible portion 323 surrounding the first rigid portion 321 including the second partition wall 420. The speaker hole 325 may be connected to the duct 425 provided by the second partition wall 420. The sound signal emitted from the speaker 430 may be transmitted to the outside of the electronic device 101 through the duct 425 and the speaker hole 325.

According to an embodiment, the frame 300 may further include a first rigid portion 321 and a second rigid portion 322 spaced apart from the first rigid portion 321. The flexible portion 323 may surround the rigid portions 321 and 322. The first rigid portion 321 may include the second partition wall 420. The first partition wall 410 may extend from the flexible portion 323 toward the inside of the frame 300. The first partition wall 410 may be disposed between the rigid portions 321 and 322.

For example, the flexible portion 323 may configure at least a portion of the external appearance of the electronic device 101. The first rigid portion 321 and the second rigid portion 322 may be covered by the flexible portion 323. The first rigid portion 321 and the second rigid portion 322 may be in contact with an inner surface of the flexible portion 323. The first rigid portion 321 including the second partition wall 420 may be disposed in the flexible portion 323, thereby reducing damage to the speaker 430 disposed in the flexible portion 323 due to an external impact. The second rigid portion 322 may be spaced apart from the first rigid portion 321 in the flexible portion 323 to support the flexible portion 323 together with the first rigid portion 321. The rigid portions 321 and 322 may support the inner surface of the flexible portion 323, thereby reducing deformation of the shape of the frame 300 due to an external impact.

For example, the first partition wall 410 may be located in an area in which the rigid portions 321 and 322 are not arranged in the flexible portion 323 of the frame 300. The first partition wall 410 may be part of the flexible portion 323. The first partition wall 410 may extend from the inner surface of the flexible portion 323 toward the inside of the frame 300, thereby separating the first rigid portion 321 from the second rigid portion 322. The part of the flexible portion 323 on which the first partition wall 410 is disposed may be supported by a part (e.g., a back of the ear) of the user's body. The first partition wall 410 extending from the flexible portion 323 may be configured to have flexibility so as to be deformable according to the shape of the part of the user's body, when the flexible portion 323 on which the first partition wall 410 is disposed comes into contact with the part of the user's body. As the flexible portion 323 is deformable to fit the shape of the body part, the flexible portion 323 including the first partition wall 410 can provide convenience to the user when wearing the electronic device 101. The first partition wall 410, which is deformable with flexibility, may be disposed between the rigid portions 321 and 322 to provide flexibility to the frame 300. The frame 300 may be provided with flexibility from the first partition wall 410, thereby reducing damage to the frame 300 from an external impact.

According to the above-described embodiment, the electronic device 101 may include the first partition wall 410 having flexibility in the frame 300, thereby providing convenience to the user of the electronic device 101 when wearing the electronic device 101, and providing flexibility in the frame 300. The frame 300 may include the second partition wall 420 having rigidity, thereby protecting the speaker 430 surrounded by the second partition wall 420 from an external impact. The frame 300 may include the flexible portion 323 and the rigid portions 321 and 322 surrounded by the flexible portion 323, thereby enabling the user to feel more convenience when the user of the electronic device 101 wears the electronic device 101, while allowing the frame 300 to maintain its shape.

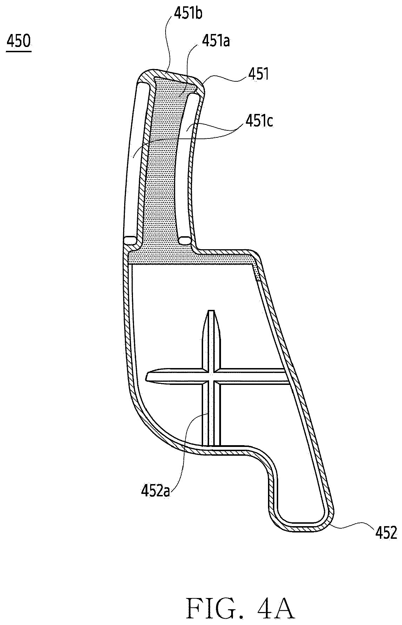

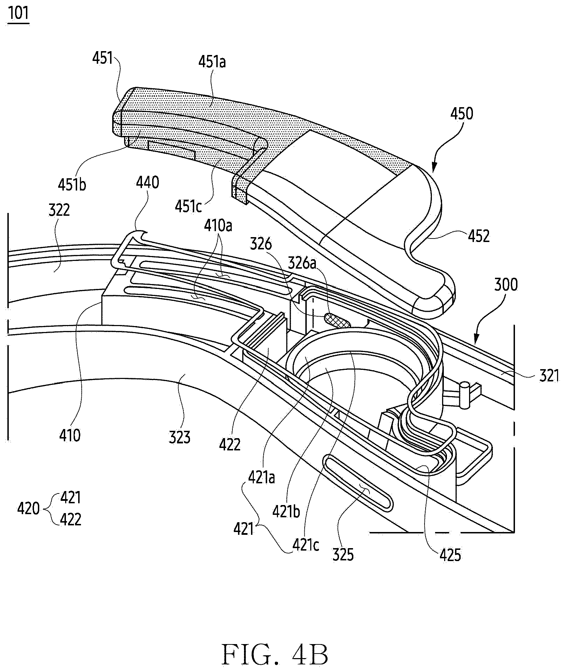

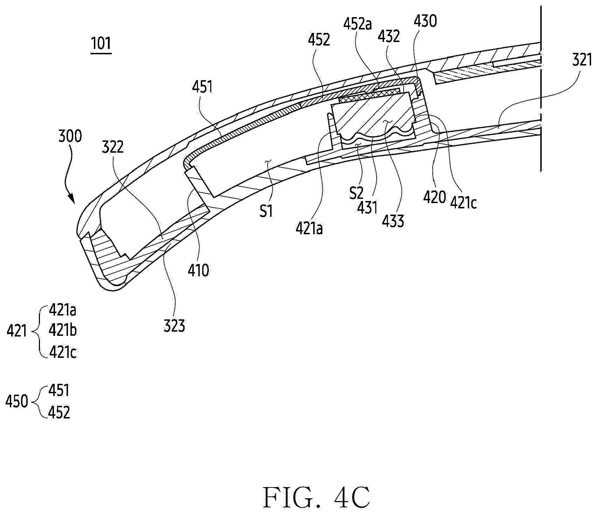

FIG. 4A is a rear view of an enclosure of an example speaker. FIG. 4B is a partially exploded perspective view of a frame of an example electronic device. And FIG. 4C is a partial cross-sectional view of an example electronic device.

Referring to FIGS. 4A, 4B, and 4C, the electronic device 101 may include a frame 300, a speaker 430 (e.g., the speaker module 240, the first speaker module 240-1, and the second speaker module 240-2 of FIG. 2B), a first space S1, a second space S2, and an enclosure 450. The frame 300 may include a first partition wall 410 and a second partition wall 420.

According to an embodiment, the speaker 430 may include a first surface 431 and a second surface 432 opposite to the first surface 431. The speaker 430 may further include a third surface 433 connecting the first surface 431 and the second surface 432. The speaker 430 may be configured to output an audio signal through the first surface 431.

For example, although not shown, the diaphragm in the speaker 430 may be configured to vibrate based on the audio signal provided to the speaker 430. With the vibration of the diaphragm, the audio signal may be converted into a sound signal and output through the first surface 431 of the speaker 430. With the vibration of the diaphragm, the second surface 432 opposite to the first surface 431 may be configured to output an audio signal having a phase different from the phase of the audio signal output through the first surface 431. The first surface 431 may be in contact with the duct 425 provided by the second partition wall 420 surrounding the speaker 430. The duct 425 may extend from the first surface 431 to the speaker hole 325 connected to the outside. The audio signal output through the first surface 431 may be transmitted to the outside of the electronic device 101 through the duct 425 and the speaker hole 325. The user of the electronic device 101 may receive a sound corresponding to the sound signal, from the sound signal transmitted to the outside.

For example, the third surface 433 may extend from the first surface 431 to the second surface 432. The third surface 433 may surround a space between the first surface 431 and the second surface 432. The third surface 433 may provide a space in which the diaphragm of the speaker 430 may vibrate. For example, the third surface 433 may be another surface of the speaker 430 between the first surface 431 and the second surface 432. The third surface 433 may support the speaker 430 to maintain the shape of the speaker 430. The third surface 433 may configure at least a portion of the external appearance of the speaker 430.

According to an embodiment, the first space S1 may be in contact with the second surface 432 of the speaker 430. The first space S1 may extend from the inside of the second partition wall 420 to the inside of the first partition wall 410. The first space S1 may be spaced apart from the second space S2 by the speaker 430. According to an embodiment, the first space S1 may be in contact with a portion of the third surface 433 of the speaker 430.

For example, as the diaphragm in the speaker 430 vibrates, an audio signal may be output to the first surface 431 and the second surface 432 opposite to the first surface 431. The second space S2 may be a space through which the audio signal output from the first surface 431 is transmitted. The first space S1 may be a space through which the audio signal output from the second surface 432 opposite to the first surface 431 is transmitted. The phase of the audio signal output through the second surface 432 may be opposite to the phase of the audio signal output through the first surface 431, by vibration of the diaphragm in the speaker 430. As the first space S1 is spaced apart from the second space S2, the audio signal output to the second space S2 through the first surface 431 may be blocked from the audio signal output to the first space S1 through the second surface 432. The electronic device 101 may be configured such that the first space S1 is spaced apart from the second space S2, thereby blocking destructive interference between the audio signal output through the first surface 431 and the audio signal output through the second surface 432. Owing to blocking such destructive interference, the electronic device 101 can enhance the quality of sound corresponding to the sound signal emitted from the first surface 431.

For example, the first surface 431 of the speaker 430 may face the second space S2. The second surface 432 opposite to the first surface 431 of the speaker 430 may face the first space S1. A portion of the third surface 433 connecting the first surface 431 and the second surface 432 may be surrounded by the second partition wall 420, thereby separating the second space S2 from the first space S1. The remaining portion of the third surface 433 may be in contact with the first space S1.

For example, the first space S1 may be a space for an audio signal output through the second surface 432 of the speaker 430. The first space S1 may be a space for resonance of an audio signal output by vibration of the diaphragm in the speaker 430. The vibration range of the diaphragm may be limited by the audio signal output through the second surface 432, as the frequency of the audio signal output by vibration of the diaphragm decreases. The first space S1 may extend from the inside of the second partition wall 420 to the inside of the first partition wall 410, thereby providing an additional space for the audio signal output through the second surface 432. The first space S1 may be extended into the first partition wall 410 to reduce limitation of the vibration range of the diaphragm and improve the sound quality of the speaker 430 due to the resonance of the audio signal output from the speaker 430.

For example, the frame 300 may be disposed between the first partition wall 410 and the second partition wall 420, and may further include a through hole 480 connecting the inner space of the first partition wall 410 and the inner space of the second partition wall 420. The first space S1 may extend from the inside of the second partition wall 420 to the inside of the first partition wall 410 via the through hole 480. The first space S1 may including the inner space of the first partition wall 410, thereby improving the sound quality of the speaker 430 due to the resonance of the audio signal output from the speaker 430.

According to an embodiment, the second space S2 may be in contact with the first surface 431 of the speaker 430. The second space S2 may be spaced apart from the first space S1 by the speaker 430. The second space S2 may be disposed inside the second partition wall 420. For example, the second space S2 may be a passage connected from the first surface 431 to the outside of the electronic device 101. For example, the second space S2 may be an inner space of the duct 425 provided by the first partition wall 410 and the speaker hole 325 connected to the duct 425. For example, the second space S2 may be defined as a space surrounded by the first surface 431 of the speaker 430 and the second partition wall 420. For example, the second space S2 may be a space in which sound waves are produced from air vibration caused by an audio signal output from the first surface 431 of the speaker 430. The electronic device 101 may include the second space S2 to provide a path through which the audio signal output through the first surface 431 of the speaker 430 is transmitted to the outside of the electronic device 101.

According to an embodiment, the first space S1 may include an air adsorbent mass to form a back volume of the first space S1. For example, the first space S1 may include at least one of zeolite or activated carbon. The first space S1 may include the air adsorption mass to provide the back volume to the first space S1 so as to improve the sound quality of the speaker 430 owing to resonance of the audio signal output from the speaker 430.

According to an embodiment, the enclosure 450 may seal the first space S1. The enclosure 450 may include a flexible region 451 disposed on the first partition wall 410 and a rigid region 452 extending from the flexible region 451 and facing the second surface 432 of the speaker 430 as disposed on the second partition wall 420. Throughout the disclosure, it is to be understood that when an element is referred to as being "on" another element, the element may be directly on the other element or there may be intervening elements therebetween. For example, throughout the disclosure, an expression "B disposed on A" may represent "B in contact with A". For example, throughout the disclosure, an expression "B disposed on A" may represent "B faced away from A". Further, for example, an expression "a flexible region disposed on a first partition wall" may represent "a flexible region in contact with a first partition wall". For example, an expression "a flexible region disposed on a first partition wall" may represent "a flexible region faced away from a first partition wall."

For example, the enclosure 450 may be disposed in the frame 300. For example, the enclosure 450 may be a part of the frame 300. For example, the enclosure 450 may cover the first space S1. For example, the enclosure 450 may be a sealing member for sealing the first space S1. For example, the enclosure 450 may be formed by means of a double injection process to include a flexible region 451 and a rigid region 452 extending from the flexible region 451. For example, the enclosure 450 may be configured of a composite material, so that the flexible region 451 includes a first material and the rigid region 452 extending from the flexible region 451 includes a second material different from the first material.

For example, the flexible region 451 may be in contact with the first partition wall 410. For example, the flexible region 451 may extend from the first partition wall 410 to the rigid region 452. For example, the flexible region 451 may be connected to the first partition wall 410. For example, the flexible region 451 may be deformable by having flexibility. The first partition wall 410 may extend from the flexible portion 323 of the frame 300 having flexibility. The flexible region 451 of the enclosure 450 may be disposed on the flexible portion 323 of the frame 300 including the first partition wall 410, and thus, may be configured to be deformed together with the first partition wall 410, as the flexible portion 323 is deformed in contact with a part (e.g., a back of the ear) of the user's body. The enclosure 450 may be configured such that the flexible region 451 is deformed together with the first partition wall 410, thereby providing the user with more convenience when the user wears the electronic device 101. The flexible region 451 may be deformed together with the first partition wall 410 when the flexible portion 323 including the first partition wall 410 is deformed by an external impact, thereby reducing damage to the frame 300 caused by the external impact. By sealing a portion of the first space S1 surrounded by the first partition wall 410, the flexible region 451 can improve the sound quality of the speaker 430 by the audio signal output to the first space S1 through the second surface 432 of the speaker 430.

For example, the rigid region 452 may be in contact with the second partition wall 420. For example, the rigid region 452 may extend from the second partition wall 420 to the flexible region 451. For example, the rigid region 452 may be connected to the second partition wall 420. For example, the rigid region 452 may have rigidity to protect the speaker 430 surrounded by the second partition wall 420 from an external impact. The second partition wall 420 may extend from the first rigid portion 321 of the frame 300 having flexibility. The rigid region 452 of the enclosure 450 may be disposed on the first rigid portion 321 of the frame 300 including the second partition wall 420, thereby protecting the speaker 430 from an external impact, together with the first rigid portion 321. By sealing a portion of the first space S1 surrounded by the second partition wall 420, the rigid region 452 can improve the sound quality of the speaker 430 from the audio signal output to the first space S1 through the second surface 432 of the speaker 430.

Heretofore, description has been made of the enclosure 450 including the flexible region 451 and the rigid region 452, but the disclosure is not limited thereto. The frame 300 of the electronic device 101 may include a plurality of flexible portions that may be deformed according to contact with a part of the user's body and a plurality of rigid portions disposed in the flexible portions. The electronic device 101 may be configured such that the plurality of electronic components are disposed in each of the plurality of rigid portions of the frame 300, in order to protect the plurality of electronic components including the speaker 430 in the electronic device 101 from an external impact. The electronic device 101 may include at least one enclosure including a plurality of rigid regions respectively corresponding to a plurality of rigid portions of the frame 300, and a plurality of flexible regions respectively corresponding to a plurality of flexible portions of the frame 300. The plurality of flexible regions, together with the plurality of flexible portions of the frame 300, may provide the user of the electronic device 101 with more convenience when the electronic device 101 is worn, and may provide the electronic device 101 with flexibility against an external impact. The plurality of rigid regions, together with the plurality of rigid portions of the frame 300, can protect a plurality of electronic components in the electronic device 101 from an external impact.

According to an embodiment, the speaker hole 325 may pass through the second partition wall 420. The speaker hole 325 may be connected from the second space S2 to the outside of the electronic device 101. For example, the second space S2 may be a space extending from the first surface 431 of the speaker 430 to the duct 425 provided by the second partition wall 420. The speaker hole 325 may pass through the second partition wall 420 and the flexible portion 323 of the frame 300 surrounding the second partition wall 420. The speaker hole 325 may be connected from the duct 425 to the outside of the electronic device 101 to transmit an audio signal output from the first surface 431 of the speaker 430 through the duct 425 to the outside of the electronic device 101.

According to an embodiment, the electronic device 101 may further include a vent hole 326. The vent hole 326 may be connected from the first space S1 to the outside of the electronic device 101. The vent hole 326 may include a mesh structure 326a to block foreign substances flowing in from the outside. For example, the vent hole 326 may be connected from the first space S1 to the outside of the electronic device 101, passing through a portion of the second partition wall 420 in contact with the first space S1 and the flexible portion 323 of the frame 300 surrounding the portion of the second partition wall 420. For example, although not illustrated herein, the vent hole 326 may be connected from the first space S1 to the outside of the electronic device 101, passing through the first partition wall 410 in contact with the first space S1 and the flexible portion 323 of the frame 300 extending from the first partition wall 410.

For example, the mesh structure 326a of the vent hole 326 may be in contact with an inner circumferential surface of the vent hole 326. The mesh structure 326a may form a boundary surface between the inside of the frame 300 and the outside of the frame 300 to block foreign substances flowing in from the outside of the electronic device 101. According to an embodiment, the vent hole 326 may include a structure including a plurality of fine holes on the boundary surface between the inside of the frame 300 and the outside of the frame 300 instead of the mesh structure 326a, thereby blocking foreign substances flowing in from the outside of the electronic device 101.

According to an embodiment, the electronic device 101 may further include an adhesive member 440 for fixing the enclosure 450 to the frame 300. The adhesive member 440 may be disposed along peripheries of the enclosure 450 facing the first partition wall 410 and the second partition wall 420. For example, a portion of the adhesive member 440 may be disposed between the periphery of the flexible region 451 of the enclosure 450 and the first partition wall 410. The remaining portion of the adhesive member 440 may be disposed between the periphery of the rigid region 452 of the enclosure 450 and the second partition wall 420. The adhesive member 440 can seal the first space S1 by fixing the enclosure 450 onto the first partition wall 410 and the second partition wall 420.

According to an embodiment, the rigid region 452 of the enclosure 450 may include a first protrusion 452a extending toward the speaker 430 from at least a portion of an inner surface facing the second surface 432 of the speaker 430. The first protruding portion 452a may be in contact with the second surface 432. The rigid region 452 may include the first protruding portion 452a to prevent the speaker 430 from moving as the diaphragm in the speaker 430 vibrates. The first protruding portion 452a may be configured to fix the speaker 430 in the second partition wall 420.

According to an embodiment, the flexible region 451 of the enclosure 450 may include a first portion 451a facing the first partition wall 410 and a second portion 451b extending from a periphery of the first portion 451a toward the first partition wall 410. The first portion 451a may be configured to be compressed toward the outside of the first space S1, as at least a portion of the second portion 451b is compressed toward the first space S1 to maintain the volume of the first space S1.

For example, the first portion 451a of the flexible region 451 may be spaced apart from, and facing, the first partition wall 410. The second portion 451b extending from the first portion 451a of the flexible region 451 may be connected to the first partition wall 410. At least a portion of the second portion 451b may be deformed as the first partition wall 410 is deformed. In case where at least a portion of the second portion 451b is compressed along the first partition wall 410 toward the first space S1, the first portion 451a extending from the second portion 451b may be compressed toward the outside of the first space S1. In case where at least a portion of the second portion 451b is compressed toward the outside of the first space S1 along the first partition wall 410, the first portion 451a extending from the second portion 451b may be compressed toward the first space S1. Owing to connecting the portions 451a and 451b of the flexible region 451 to each other, the flexible region 451 may be configured to maintain the volume of the first space S1 when the first partition wall 410 and/or the flexible portion 323 of the frame 300 including the first partition wall 410 is deformed by an external impact. As the flexible region 451 is configured to maintain the volume of the first space S1, the enclosure 450 can maintain the sound quality of the speaker 430 by the audio signal output to the first space S1 through the second surface 432 of the speaker 430.

Heretofore, description has been made of the flexible region 451 including the first portion 451a and the second portion 451b, but the disclosure is not limited thereto. The flexible region 451 may include a plurality of portions connected to each other. In case that any one portion of the plurality of portions is compressed toward the first space S1, the flexible region 451 may be configured such that another portion of the plurality of portions connected to the one portion is compressed toward the outside of the first space S1, thereby maintaining the volume of the first space S1. The electronic device 101 can maintain the sound quality of the speaker 430 by the audio signal output to the first space S1, by maintaining the volume of the first space S1 within a specified range irrespective of deformation of the frame 300 by an external impact and/or coming into contact with a part of the user's body.

According to an embodiment, the flexible region 451 of the enclosure 450 may include at least one of silicone rubber, thermoplastic polyurethane (TPU), or an elastomer.

According to an embodiment, the flexible region 451 of the enclosure 450 may include a second protrusion 451c extending from the second portion 451b toward the first partition wall 410. The first partition wall 410 may include a guide groove 410a configured to receive at least a portion of the second protruding portion 451c. For example, the second protruding portion 451c may be in contact with the first partition wall 410. As the at least a portion of the second protrusion 451c is inserted into the guide groove 410a, the flexible region 451 including the second protrusion 451c may be coupled to the first partition wall 410 including the guide groove 410a. The guide groove 410a may accommodate the second protrusion 451c to seal the first space S1. The guide groove 410a may accommodate the second protruding portion 451c to fix the enclosure 450 to the first partition wall 410.

According to an embodiment, the second partition wall 420 may include an inner wall 421 and an outer wall 422 extending from the inner wall 421. The inner wall 421 may accommodate the speaker 430. The outer wall 422 may be in contact with the first partition wall 410. The outer wall 422 may be disposed along a periphery of the rigid region 452 of the enclosure 450.

For example, the inner wall 421 may be in contact with the speaker 430 and surround at least a portion of the third surface 433 of the speaker 430. For example, the inner wall 421 may separate the second space S2 from the first space S1 by surrounding at least a portion of the third surface 433 of the speaker 430. For example, the inner wall 421 may include the duct 425 to transmit an audio signal output from the first surface 431 of the speaker 430 to the outside of the electronic device 101. For example, the second space S2 may be a space surrounded by the first surface 431 of the speaker 430 and the inner wall 421 of the second partition wall 420. The second partition wall 420 may be configured to include the inner wall 421 to separate the second space S2 from the first space S1 and provide a passage through which the audio signal output through the first surface 431 of the speaker 430 is transmitted to the outside of the electronic device 101.

For example, the outer wall 422 may be connected to the rigid region 452 of the enclosure 450 to seal the first space S1. For example, the outer wall 422 may provide an additional space between the outer wall 422 and the inner wall 421 in the first space S1. For example, the inner space of the outer wall 422 may be connected to the inner space of the first partition wall 410 through the through hole 480 between the outer wall 422 and the first partition wall 410. For example, the first space S1 may be a space surrounded by the outer wall 422, the first partition wall 410, the speaker 430, and the enclosure 450. The second partition wall 420 may include the outer wall 422 disposed along a periphery of the rigid region 452 of the enclosure 450, thereby sealing the first space S1 and providing the additional space in the first space S1.

According to an embodiment, the inner wall 421 may include a third portion 421a, a fourth portion 421b, and a step portion 421c disposed between the third portion 421a and the fourth portion 421b. The third portion 421a may surround the remaining portion except for a portion of the third surface 433 of the speaker 430 in contact with the first space S1. The fourth portion 421b may surround the second space S2. The step portion 421c may support the first surface 431 of the speaker 430.

For example, a portion of the third surface 433 of the speaker 430 may be covered by the third portion 421a. As the portion of the third surface 433 is in contact with the third portion 421a, the second space S2 may be separated from the first space S1. For example, the fourth portion 421b may surround the second space S2 together with the first surface 431 of the speaker 430.

For example, the fourth portion 421b may have a structure protruding from the third portion 421a in the inner wall 421. The step portion 421c of the inner wall 421 may be disposed in between the third portion 421a and the fourth portion 421b, by the protruding third portion 421a. The step portion 421c may be in contact with a periphery of the first surface 431 of the speaker 430. The step portion 421c may support the first surface 431, thereby providing a seating space for speaker 430 together with the third portion 421a. The step portion 421c may be in contact with the first surface 431 of the speaker 430 to separate the second space S2 from the first space S1.

According to the above-described embodiment, the electronic device 101 may include the second space S2 and the first space S1 spaced apart from the second space S2, thereby providing a space for an audio signal output from the speaker 430 in the electronic device 101. The electronic device 101 may include the enclosure 450 configured to seal the first space S1, thereby improving the sound quality of the speaker 430 by the audio signal output to the space S2. The enclosure 450 may provide an additional space in the first space S1 and include the flexible region 451 disposed on the deformable first partition wall 410, thereby providing flexibility to the frame 300 including the first partition wall 410 that may be deformed as it comes into contact with a part of the user's body. The flexible region 451 may be configured to maintain the volume of the first space S1 surrounded by the flexible region 451 and the first partition wall 410 within a specified range, thereby maintaining the sound quality of the speaker 430 by the audio signal output to the first space S1. The enclosure 450 may include the rigid region 452 disposed on the second partition wall 420 surrounding the speaker 430, thereby protecting the speaker 430 from an external impact.

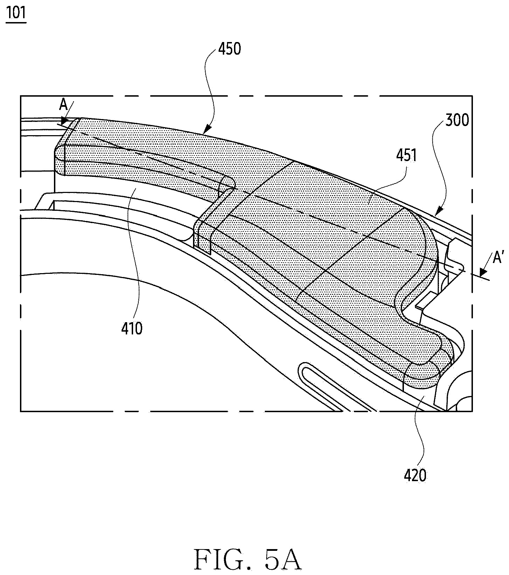

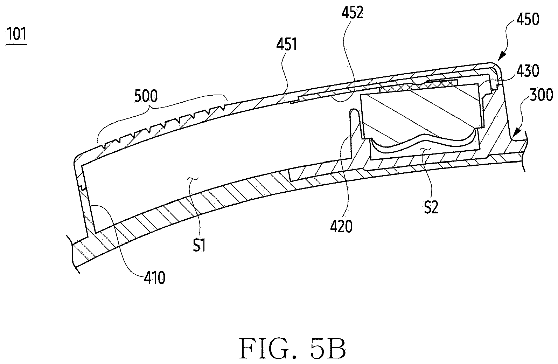

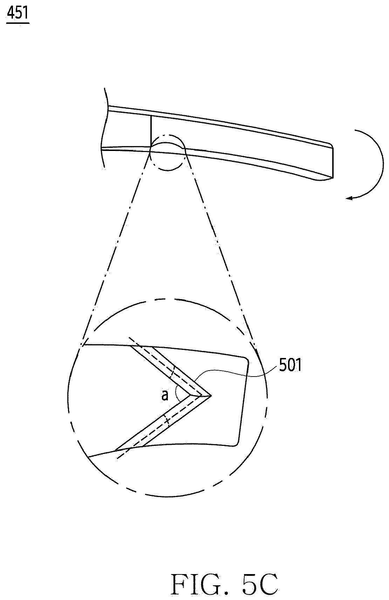

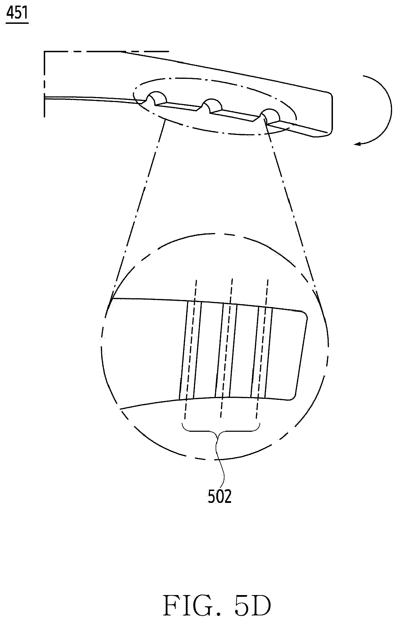

FIG. 5A shows a portion of a frame of an example electronic device. FIG. 5B is a partial cross-sectional view of an example electronic device taken along line A-A' of FIG. 5A. And FIGS. 5C and 5D illustrate a portion of an enclosure of an example speaker.

Referring to FIGS. 5A and 5B, the electronic device 101 may include a frame 300, a speaker 430 (e.g., the speaker module 240, the first speaker module 240-1, and the second speaker module 240-2 of FIG. 2B), a first space S1, a second space S2, and an enclosure 450. The frame 300 may include a first partition wall 410 and a second partition wall 420. The enclosure 450 may include a flexible region 451 and a rigid region 452.

Hereinafter, redundant descriptions of the components of the electronic device 101 described with reference to FIGS. 4A to 4C will be omitted for conciseness of description.

According to an embodiment, the flexible region 451 may cover the rigid region 452. For example, the flexible region 451 may surround the rigid region 452. For example, the rigid region 452 may overlap a portion of the flexible region 451 when viewed from above. For example, the rigid region 452 may be attached to an inner surface of the flexible region 451. As the flexible region 451 surrounds the rigid region 452, the enclosure 450 can reduce detachment of the rigid region 452 from the flexible region 451.

Referring to FIGS. 5B, 5C, and 5D, the flexible region 451 of the enclosure 450 may include at least one grooved structure or corrugated structure 500.

For example, referring to FIG. 5B, the flexible region 451 may include at least one grooved or corrugated structure 500 in a portion on the first partition wall 410, in order to maintain the volume of the first space S1 by deformation along the first partition wall 410 deformed by an external pressure. The at least one grooved or corrugated structure 500 may be configured such that the flexible region 451 is bent toward the outside of the first space S1, in the case of the frame 300 including the first partition wall 410 being compressed toward the first space S1. The at least one grooved or corrugated structure 500 may be configured such that the flexible region 451 is bent toward the first space S1 in the case of the frame 300 including the first partition wall 410 being compressed toward the outside of the first space S1.

For example, referring to FIG. 5C, the enclosure 450 may include a first grooved or corrugated structure 501 formed in a pattern including an angle (a) in the flexible region 451. The first grooved or corrugated structure 501 may be configured with the angle (a) so that the flexible region 451 may be easily bent by an external pressure.

For example, referring to FIG. 5D, the enclosure 450 may include a second grooved or corrugated structure 502 formed in patterns extending in parallel to each other in the flexible region 451. The second grooved or corrugated structure 502 may be configured to have the patterns parallel to each other so that the flexible region 451 may be easily bent by an external pressure.

According to the above-described embodiment, the enclosure 450 may include the flexible region 451 surrounding the rigid region 452, thereby reducing peeling of the rigid region 452 from the flexible region 451. The flexible region 451 having at least one grooved or corrugated structure 500 makes it possible to reduce a change in the volume of the first space S1 according to an external pressure.

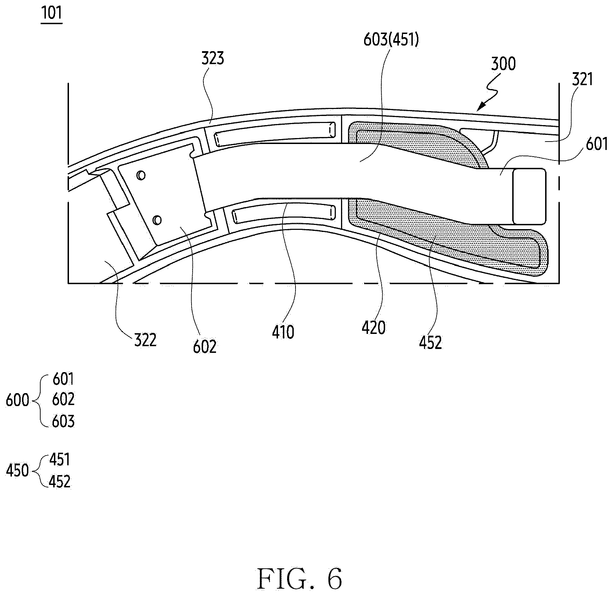

FIG. 6 shows a portion of an example electronic device.

Referring to FIG. 6, the electronic device 101 may include a frame 300 and an enclosure 450. The frame 300 may include a first rigid portion 321 including a second partition wall 420, a second rigid portion 322 spaced apart from the first rigid portion 321, and a flexible portion 323 surrounding the first rigid portion 321 and the second rigid portion 322 and including a first partition wall 410. The enclosure 450 may include a flexible region 451 and a rigid region 452.

According to an embodiment, the electronic device 101 may further include a flexible printed circuit board 600 in the frame 300. The flexible printed circuit board 600 may extend from the first rigid portion 321 to the second rigid portion 322 across the flexible portion 323. The flexible region 451 of the enclosure 450 may be a part of the flexible printed circuit board 600 disposed on the first partition wall 410 of the flexible portion 323.

For example, a first region 601 of the flexible printed circuit board 600 may be disposed in the first rigid portion 321 including the second partition wall 420. A second region 602 of the flexible printed circuit board 600 may be disposed in the second rigid portion 322 spaced apart from the first rigid portion 321. A third region 603 of the flexible printed circuit board 600 may extend from the first region 601 to the second region 602. The first region 601 may be attached on the rigid region 452 of the enclosure 450. The third region 603 extending from the first region 601 may be the flexible region 451 of the enclosure 450 disposed on the deformable first partition wall 410. The third region 603 of the flexible printed circuit board 600, together with the rigid region 452 of the enclosure 450, may seal a first space (e.g., the first space S1 of FIG. 4C) extending from the inside of the second partition wall 420 to the inside of the first partition wall 410. Since the flexible printed circuit board 600 has flexibility, the third region 603 may be deformed according to the flexible portion 323 of the frame 300 deformed by coming into contact with a part of the user's body, and/or the first partition wall 410 included in the flexible portion 323, thereby providing the user with more convenience when the user wears the electronic device 101. The first space S1 may be sealed by the third region 603 so as to provide a space for resonance of an audio signal output from the speaker (e.g., the speaker module 240, the first speaker module 240-1, and the second speaker module 240-2 of FIG. 2B, and the speaker 430 of FIG. 3B) surrounded by the second partition wall.

According to an embodiment, the rigidity of one portion on the first partition wall 410 of the flexible printed circuit board 600 may be lower than the rigidity of the remaining portion of the flexible printed circuit board 600 extending from the one portion. For example, the flexible printed circuit board 600 may be a rigid flexible printed circuit board (i.e. the printed circuit board 600 may have rigid parts as well as flexible parts). For example, the first region 601 and the second region 602 of the flexible printed circuit board arranged in the rigid portions 321 and 322 of the frame 300 may have rigidity; and the third region 603 extending from the first region 601 to the second region 602 may have flexibility. Owing to having the rigidity, the first region 601 and the second region 602, together with the rigid portions 321 and 322 of the frame 300, may protect electronic components (e.g., the speaker 430 of FIG. 3B) arranged in the rigid portions 321 and 322 from an external impact. The third region 603 with flexibility may provide the user of the electronic device 101 with more convenience when the user wears the electronic device 101.

According to the above-described embodiment, a wearable device (e.g., the electronic device 101 of FIG. 1) may include a frame (e.g., the frame 420 of FIG. 2A) including a first partition wall (e.g., the first partition wall 410 of FIG. 3B) deformable as having flexibility and a second partition wall (e.g., the second partition wall 420 of FIG. 3B) in contact with the first partition wall and having rigidity, the frame configured to be supported by a part of a user's body of the wearable device and at least partially deformable according to a shape of the part of the user's body. The wearable device may include a speaker (e.g., the speaker module 240, the first speaker module 240-1, the second speaker module 240-2, or the speaker 430 of FIG. 4C) including a first surface (e.g., the first surface 431 of FIG. 4C) and a second surface (e.g., the second surface 432 of FIG. 4C) opposite to the first surface and surrounded by the second partition wall. The wearable device may include a first space (e.g., the first space S1 of FIG. 4C) in contact with the second surface and extending from the inside of the second partition wall to the inside of the first partition wall. The wearable device may include an enclosure (e.g., the enclosure 450 of FIG. 4A) including a flexible region (e.g., the flexible region 451 of FIG. 4A) disposed on the first partition wall and a rigid region (e.g., the rigid region 452 of FIG. 4A) extending from the flexible region and facing the second surface of the speaker as disposed on the second partition wall, the enclosure being configured to seal the first space. According to the above-mentioned embodiments, the wearable device may include the deformable frame to provide convenience to a user of the wearable device. The wearable device may include the first space for resonance of an audio signal output from the speaker, thereby improving the sound quality of the speaker by the resonance of the audio signal. The wearable device may include the enclosure to seal the first space. The enclosure may include the flexible region disposed on the first partition wall, thereby providing convenience to the user and maintaining a volume of the first space within a specified range. The enclosure may include the rigid region disposed on the second partition wall, thereby protecting the speaker surrounded by the second partition wall from an external impact. The above-mentioned embodiments may provide various effects in addition to the above-mentioned effects.

According to an embodiment, the frame may further include rigid portions (e.g., the rigid portions 321 and 322 of FIG. 3B) including a first rigid portion (e.g., the first rigid portion 321 of FIG. 3B) including the second partition wall and a second rigid portion (e.g., the second rigid portion 322 of FIG. 3B) spaced apart from the first rigid portion, and a flexible portion (e.g., the flexible portion 323 of FIG. 3A) surrounding the rigid portions. The first partition wall may extend from the flexible portion toward an inside of the frame and may be disposed between the rigid portions. According to the above-described embodiment, the frame may include the rigid portions to support the frame and reduce damage to electronic components (e.g., a speaker) disposed in the rigid portions due to an external impact. The frame may include the flexible portion to provide convenience to the user of the wearable device. The above-mentioned embodiments may have various effects in addition to the above-mentioned effects.

According to an embodiment, the wearable device may further include a flexible printed circuit board (e.g., the flexible printed circuit board 600 of FIG. 6) in the frame, extending from the first rigid portion across the flexible portion to the second rigid portion. The flexible region of the enclosure may be a portion (e.g., the third region 603 of FIG. 6) of the flexible printed circuit board disposed on the first partition wall. According to the above-described embodiment, the wearable device may include the flexible printed circuit board to electrically connect a plurality of electronic components inside the frame to each other through the flexible printed circuit board. The flexible region of the enclosure may be a portion of the flexible printed circuit board, thereby enabling simplification of the inside of the frame. The above-mentioned embodiments may have various effects in addition to the above-mentioned effects.

According to an embodiment, the rigidity of the portion of the flexible printed circuit board may be lower than the rigidity of the remaining portion (e.g., the first region 601 and the second region 602 of FIG. 6) of the flexible printed circuit board extending from the portion. According to the above-described embodiment, the rigidity of the portion is lower than the rigidity of the remaining portion, and therefore, the flexible printed circuit board can provide convenience to a user of the wearable device. Further, the flexible printed circuit board may be configured such that the rigidity of the remaining portion is higher than the rigidity of the portion, thereby protecting an electronic component disposed on the remaining portion from an external impact. The above-mentioned embodiments may have various effects in addition to the above-mentioned effects.

According to an embodiment, the wearable device may further include a second space (e.g., the second space S2 of FIG. 4C) in contact with the first surface and disposed in the second partition wall, and a speaker hole (e.g., the speaker hole 325 of FIG. 3A) passing through the first partition wall and connected from the second space to the outside of the wearable device. According to the above-described embodiment, the wearable device may include the speaker hole to provide a path for an audio signal output through the first surface of the speaker. The above-mentioned embodiments may have various effects including the above-mentioned effects.

According to an embodiment, the wearable device may include a mesh structure (e.g., the mesh structure 326a of FIG. 4B) configured to reduce foreign substances flowing into the first space from the outside of the wearable device, and may further include a vent hole (e.g., the vent hole 326 of FIG. 4B) connected from the first space to the outside of the wearable device. According to the above-mentioned embodiment, the wearable device may include the vent hole configured to ventilate air within the first space. The vent hole may include the mesh structure so as to block foreign substances flowing into the first space from the outside. The above-mentioned embodiments may have various effects in addition to the above-mentioned effects.

According to an embodiment, the rigid region may include a first protrusion (e.g., the first protrusion 452a of FIG. 4A) extending from an inner surface facing the second surface of the speaker toward the speaker, the first protrusion being in contact with the second surface. According to the above-described embodiment, the rigid region may include the first protrusion, thereby blocking the speaker from moving as the diaphragm in the speaker vibrates and fixing the speaker in the second partition wall. The above-mentioned embodiments may have various effects in addition to the above-mentioned effects.

According to an embodiment, the flexible region may surround the rigid region. According to the above-mentioned embodiment, the flexible region may surround the rigid region, thereby reducing peeling of the rigid region from the flexible region. The above-mentioned embodiments may have various effects in addition to the above-mentioned effects.

According to an embodiment, the wearable device may further include an adhesive member (e.g., the adhesive member 440 of FIG. 4B) disposed along a periphery of the enclosure facing the first partition wall and the second partition wall and configured to fix the enclosure to the frame. According to the above-mentioned embodiment, the wearable device may include the adhesive member, thereby sealing the first space and fixing the enclosure onto the first partition wall and the second partition wall. The above-mentioned embodiments may have various effects in addition to the above-mentioned effects.

According to an embodiment, the flexible region may include a first portion (e.g., the first portion 451a of FIG. 4A) facing the first partition wall and a second portion (e.g., the second portion 451b of FIG. 4A) extending from a periphery of the first portion toward the first partition wall. The first portion may be configured to be compressed toward the outside of the first space as at least a portion of the second portion is compressed toward the first space, in order to maintain a volume of the first space. According to the above-described embodiment, the flexible region may include the first portion and the second portion configured to be deformed according to deformation of the first partition wall, thereby maintaining the volume of the first space within a specified range. The above-mentioned embodiments may have various effects in addition to the above-mentioned effects.

According to an embodiment, the flexible region may include a second protrusion (e.g., the second protrusion 451c of FIG. 4A) extending from the second portion toward the first partition wall. The first partition wall may include a guide groove (e.g., the guide groove 410a of FIG. 4B) configured to accommodate at least a portion of the protrusion. According to the above-described embodiment, the wearable device may include the second protrusion and the guide groove so as to fix the flexible region onto the first partition wall and seal the first space. The above-mentioned embodiments may have various effects in addition to the above-mentioned effects.

According to an embodiment, the wearable device may further include the second space in contact with the first surface and disposed in the second partition wall. The second partition wall may include an inner wall (e.g., the inner wall 421 of FIG. 4B) for accommodating the speaker and in contact with the second space, and an outer wall (e.g., the outer wall 422 of FIG. 4B) extending from the inner wall and in contact with the first partition wall. The outer wall may be disposed along a periphery of the rigid region. According to the above-mentioned embodiment, the second partition wall may include the inner wall, thereby fixing the speaker and separating the first space from the second space. The second partition wall may include the outer wall, thereby providing an additional space to the first space and fixing the rigid region of the enclosure onto the first partition wall. The above-mentioned embodiments may have various effects in addition to the above-mentioned effects.

According to an embodiment, the speaker may further include a third surface (e.g., the third surface 433 of FIG. 4C) connecting the first surface and the second surface. The first space S1 may be in contact with a portion of the third surface 433. The inner wall may include a third portion (e.g., the third portion 421a of FIG. 4B) surrounding the remaining portion of the third surface, a fourth portion (e.g., the fourth portion 421b of FIG. 4B) extending from the third portion and surrounding the second space, and a step portion (e.g., the step portion 421c of FIG. 4B) disposed between the third portion and the fourth portion and supporting the first surface of the speaker. According to the above-mentioned embodiment, the inner wall may include the third portion, thereby separating the first space from the second space. The inner wall may include the fourth portion, thereby providing the second space for an audio signal output through the first surface of the speaker. The inner wall may include the step portion so as to provide a seating space for the speaker together with the third portion. The step portion may support the speaker to fix the speaker. The above-mentioned embodiments may have various effects including the above-mentioned effects.

According to an embodiment, the flexible region may include at least one corrugated structure (e.g., the at least one corrugated structure 500 of FIG. 5B, the first corrugated structure 501 of FIG. 5C, and the second corrugated structure 502 of FIG. 5D). According to the above-described embodiment, the flexible region may include the at least one corrugated structure, thereby providing more convenience to a user of the wearable device and allowing the first space to maintain a volume within a specified range. The above-mentioned embodiments may have various effects in addition to the above-mentioned effects.

According to an embodiment, the flexible region may include at least one of silicone rubber, thermoplastic polyurethane (TPU), or an elastomer. According to the above-described embodiment, the flexible region may include at least one of the silicone rubber, the TPU, or the elastomer, thereby providing more convenience to a user of the wearable device. The above-mentioned embodiments may have various effects in addition to the above-mentioned effects.

According to an embodiment, a wearable device may include a frame including a first partition wall being deformable as having flexibility and a second partition wall in contact with the first partition wall and having rigidity, the frame being supported by a part of a user's body of the wearable device, and being at least partially deformable according to a shape of the part of the user's body. The wearable device may include a speaker including a first surface, a second surface opposite to the first surface, and a third surface connecting the first surface and the second surface, the speaker being surrounded by the second partition wall. The wearable device may include a first space in contact with the second surface and a portion of the third surface and extending from an inside of the second partition wall to an inside of the first partition wall. The wearable device may include a second space spaced apart from the first space by the speaker and being in contact with the first surface, the second space being disposed inside the second partition wall. The wearable device further include a speaker hole connected from the second space to an outside of the wearable device and a vent hole connected from the first space to the outside of the wearable device. The wearable device may include an enclosure including a flexible region disposed on the first partition wall, and a rigid region extending from the flexible region and facing the second surface of the speaker as disposed on the second partition wall, the enclosure sealing the first space. According to the above-mentioned embodiments, the wearable device may include the deformable frame, thereby providing convenience to a user of the wearable device. The wearable device may include the second space, thereby providing a passage for an audio signal output from the speaker to the outside. The wearable device may be spaced apart from the second space and include the first space for resonance of an audio signal output from the speaker, thereby improving the sound quality of the speaker by the resonance of the audio signal. The wearable device may include the enclosure to seal the first space. The enclosure may include the flexible region disposed on the first partition wall, so as to provide more convenience to the user and maintain a volume of the first space within a specified range. The enclosure may include the rigid region disposed on the second partition wall, thereby protecting the speaker surrounded by the second partition wall from an external impact. The wearable device may include the speaker hole so as to provide a path for an audio signal output through the first surface of the speaker. According to the above-mentioned embodiment, the wearable device may include the vent hole so as to ventilate air in the first space. The above-mentioned embodiments may have various effects in addition to the above-mentioned effects.

According to an embodiment, the frame may further include rigid portions including a first rigid portion including the second partition wall and a second rigid portion spaced apart from the first rigid portion, and a flexible portion surrounding the rigid portions. The first partition wall may extend from the flexible portion toward an inside of the frame and may be disposed between the rigid portions. According to the above-described embodiment, the frame may include the rigid portions, thereby supporting the frame and reducing damage to electronic components (e.g., a speaker) disposed in the rigid portions due to an external impact. The frame may include the flexible portion so as to provide more convenience to a user of the wearable device. The above-mentioned embodiments may have various effects in addition to the above-mentioned effects.

According to an embodiment, the wearable device may further include a flexible printed circuit board in the frame, extending from the first rigid portion across the flexible portion to the second rigid portion. The flexible region of the enclosure may be a portion of the flexible printed circuit board disposed on the first partition wall. According to the above-described embodiment, the wearable device may include the flexible printed circuit board, thereby electrically connecting a plurality of electronic components inside the frame to each other through the flexible printed circuit board. The flexible region of the enclosure may be a portion of the flexible printed circuit board, thereby simplifying the inside of the frame. The above-mentioned embodiments may have various effects in addition to the above-mentioned effects.

According to an embodiment, the flexible region may include a first portion facing the first partition wall and a second portion extending from a periphery of the first portion toward the first partition wall. The first portion may be configured to be compressed toward the outside of the first space as at least a portion of the second portion is compressed toward the second space, in order to maintain a volume of the first space. According to the above-described embodiment, the flexible region may include the first portion and the second portion configured to be deformed according to deformation of the first partition wall, thereby allowing the volume of the first space to be maintained within a specified range. The above-mentioned embodiments may have various effects in addition to the above-mentioned effects.

According to an embodiment, the second partition wall may include an inner wall accommodating the speaker and in contact with the second space, and an outer wall extending from the inner wall and in contact with the first partition wall. The outer wall may be disposed along a periphery of the rigid region. According to the above-mentioned embodiment, the second partition wall may include the inner wall so as to fix the speaker and separate the first space from the second space. The second partition wall may include the outer wall so as to provide an additional space to the first space and fix the rigid region of the enclosure onto the second partition wall. The above-mentioned embodiments may have various effects in addition to the above-mentioned effects.

According to an embodiment, the inner wall may include a third portion surrounding a remaining portion of the third surface, a fourth portion extending from the third portion and surrounding the second space, and a step portion disposed between the third portion and the fourth portion and supporting the first surface of the speaker. According to the above-mentioned embodiment, the inner wall may include the third portion so as to separate the first space from the second space. The inner wall may include the fourth portion so as to provide the second space for an audio signal output through the first surface of the speaker. The inner wall may include the step portion so as to provide a seating space for the speaker together with the third portion. The step portion may fix the speaker by supporting the speaker. The above-mentioned embodiments may have various effects in addition to the above-mentioned effects.

According to an embodiment, the flexible region may include at least one corrugated structure. According to the above-described embodiment, the flexible region may include the at least one corrugated structure so as to provide more convenience to a user of the wearable device and allow the first space to maintain a volume within a specified range. The above-mentioned embodiments may have various effects in addition to the above-mentioned effects.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment, the electronic devices are not limited to those described above.

It should be appreciated that various embodiments and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may be interchangeably used with other terms, for example, "logic," "logic block,", "unit", "part,", "portion" or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., an internal memory 136 or an external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments may be included and provided in a computer program product. The computer program product may be traded as a product between a seller and a buyer. The computer program product may be distributed in the form of a machine-readable storage medium (e.g., a compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments of the disclosure, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A wearable device (101), comprising:
a frame (300) including a first partition wall (410) deformable as having flexibility and a second partition wall (420) in contact with the first partition wall (410) and having rigidity, the frame (300) configured to be supported by a part of a user's body of the wearable device (101) and at least partially deformable according to a shape of the part of the user's body;
a speaker (430) including a first surface (431) and a second surface (432) opposite to the first surface (431), and surrounded by the second partition wall (420);
a first space (S1) in contact with the second surface (432) and extending from an inside of the second partition wall (420) to an inside of the first partition wall (410); and
an enclosure (450) including a flexible region (451) disposed on the first partition wall (410), and a rigid region (452) extending from the flexible region (451) and facing the second surface (432) of the speaker (430) as disposed on the second partition wall (420), the enclosure (450) sealing the first space (S1).

2. The wearable device (101) of claim 1,
wherein the frame (300) further includes rigid portions (321, 322) including a first rigid portion (321) and a second rigid portion (322) spaced apart from the first rigid portion (321), and a flexible portion (323) surrounding the rigid portions (321, 322), and
wherein the first partition wall (410) extends from the flexible portion (323) toward an inside of the frame (300) and is disposed between the rigid portions (321, 322).

3. The wearable device (101) of claim 1 or 2, further comprising:
a flexible printed circuit board (600) in the frame (300), extending from the first rigid portion (321) across the flexible portion (323) to the second rigid portion (322), and
wherein the flexible region (451) of the enclosure (450) is a portion (603) of the flexible printed circuit board (600) disposed on the first partition wall (410).

4. The wearable device (101) of any one of claims 1 to 3,
wherein a rigidity of the portion (603) of the flexible printed circuit board (600) is lower than a rigidity of a remaining portion (601, 602) of the flexible printed circuit board (600) extending from the portion of the flexible printed circuit board (600).

5. The wearable device (101) of any one of claims 1 to 4, further comprising:
a second space (S2) in contact with the first surface (431) and disposed in the inside of the second partition wall (420); and
a speaker hole (325) passing through the second partition wall (420) and connected from the second space (S2) to an outside of the wearable device (101).

6. The wearable device (101) of any one of claims 1 to 5, further comprising:
a vent hole (326) including a mesh structure (326a) for reducing foreign material flowing into the first space (S 1) from the outside of the wearable device (101) and connected to the outside of the wearable device (101) from the first space (S 1).

7. The wearable device (101) of any one of claims 1 to 6,
wherein the rigid region (452) includes a first protrusion (452a) extending from at least a portion of an inner surface facing the second surface (432) of the speaker (430) toward the speaker (430), the first protrusion (452a) being in contact with the second surface (432).

8. The wearable device (101) of any one of claims 1 to 7,
wherein the flexible region (451) covers the rigid region (452).

9. The wearable device (101) of any one of claims 1 to 8, further comprising:
an adhesive member (440) for fastening the enclosure (450) to the frame (300) and disposed along a periphery of the enclosure (450) facing the first partition wall (410) and the second partition wall (420).

10. The wearable device (101) of any one of claims 1 to 9,
wherein the flexible region (451) includes:
a first portion (451a) facing the first partition wall (410); and
a second portion (451b) extending from a periphery of the first portion (451a) toward the first partition wall (410); and,
wherein the first portion (451a) is configured to be compressed toward an outside of the first space (S1), as at least a portion of the second portion (451b) is compressed toward the first space (S1) to maintain a volume of the first space (S1).

11. The wearable device (101) of any one of claims 1 to 10,
wherein the flexible region (451) includes a second protrusion (451c) extending from the second portion (451b) toward the first partition wall (410); and,
wherein the first partition wall (410) includes a guide groove (410a) accommodating at least a portion of the second protrusion (451c).

12. The wearable device (101) of any one of claims 1 to 11, further comprising:
a second space (S2) in contact with the first surface (431) and disposed in the inside of the second partition wall (420); and
wherein the second partition wall (420) includes:
an inner wall (421) accommodating the speaker (430) and in contact with the second space (S2); and
an outer wall (422) extending from the inner wall (421) and in contact with the first partition wall (410);
wherein the outer wall (422) is disposed along a periphery of the rigid region (452).

13. The wearable device (101) of any one of claims 1 to 12,
wherein the speaker (430) further includes a third surface (433) connecting the first surface (431) and the second surface (432),
wherein the first space (S1) is in contact with a portion of the third surface (433), and
wherein the inner wall (421) includes a third portion (421a) surrounding a remaining portion of the third surface (433), a fourth portion (421b) extending from the third portion (421a) and surrounding the second space (S2), and a step portion (421c) disposed between the third portion (421a) and the fourth portion (421b) and supporting the first surface (431) of the speaker (430).

14. The wearable device (101) of any one of claims 1 to 13, wherein the flexible region (451) includes at least one corrugated structure (500; 501; 502).

15. The wearable device (101) of any one of claims 1 to 14, wherein the flexible region (451) includes at least one of silicone rubber, thermoplastic polyurethane (TPU), and elastomer.
